# EUROPEAN PATENT SPECIFICATION

(11) **EP 0 965 010 B1**
(45) Date of publication and mention of the grant of the patent: **02.05.2003**
(21) Application number: 98904259.3
(22) Date of filing: 06.02.1998
(51) Int. Cl.: F16J 15/10, F16J 15/14, C09K 3/10, C10M 103/00, C10N 40/36

(54) **RELEASE AGENT**
TRENNMITTEL
AGENT ANTI-ADHERENT

(30) Priority: 05.03.1997 GB 9704560
(43) Date of publication of application: 22.12.1999
(73) Proprietor: Federal-Mogul Technology Limited, Rugby, Warwickshire CV22 7SA (GB)
(72) Inventor: ATKINSON, Alan, William, Warwickshire CV23 8TJ (GB); BOND, Stephen, Peter, Warwickshire CV22 5RE (GB); TURLAND, Darryl, Alfred, Warwickshire CV22 7LP (GB)
(74) Representative: Drury, Peter Lawrence
(86) International application number: GB9800373
(87) International publication number: WO98039585

(56) References cited:
- EP-A- 0 106 585
- DE-A- 2 731 204
- DATABASE WPI Week 8247 Derwent Publications Ltd., London, GB; AN 82-01201j XP002071078 & JP 57 168 745 A (HITACHI FUNMATSU YAKIN KK) , 18 October 1982
- DATABASE WPI Week 9332 Derwent Publications Ltd., London, GB; AN 93-253014 XP002071079 & JP 05 171 134 A (NICHIAS CORP) , 9 July 1993

## Description

This invention relates to a gasket comprising a layer formed by a release agent.

There are many circumstances in which it is desirable to prevent parts which are in contact with one another from sticking to one another, since inconvenience and damage can be caused by the action of separating the parts. Release agents are intended for introduction between such parts to prevent sticking.

In some circumstances, release agents can be provided by powders or papers but this is not always practical, eg in the case of gaskets. In other circumstances, release agents can be provided by an organic solvent-based liquid which is sprayed on to a part to leave a thin layer of release agent on the part; this is, however, undesirable on environmental grounds.

The possibility or parts sticking together is increased where the parts are pressed together as occurs, for example, where a gasket is clamped between two parts. Many gaskets comprise a resilient material or a resilient portion which is deformed to create a seal. For example, a gasket may comprise a sheet-like core, eg of steel, having, on one or both sides, a coating of a resilient material such as graphite or nitrile butadiene rubber. In some cases, the resilient material may be formed as beads extending around closed paths on the surface of the core. In other cases, a gasket may seal by deformation of resilient portions thereof such a embossed ridges formed in a metal sheet of the gasket.

In some circumstances, there is a tendency for the resilient material or portion of a gasket to stick to the part against which the gasket seals. A particular problem arises in the case of gaskets which are clamped between parts for extensive periods. An example is the case of a head gasket of an internal combustion engine, which seals between the engine block and the engine head. During the life of an engine, it may be necessary to remove the head from the block, eg to replace the head gasket. It is found that, on disassembly, the gasket sometimes sticks to the head or to the block. This is undesirable practically, as the surfaces have to be scraped clean before a new gasket can be fitted and the head replaced. It is, therefore, desirable for the gasket to stay intact and to come cleanly away from the head of the block of the engine.

When a layer of a release agent according to the present invention is applied to graphite-coated or nitrile butadiene rubber-coated cylinder head gaskets, it is found that the gasket does not snick to the head or the block, and the gasket comes cleanly away, remaining intact, when required.

Some gaskets are made from steel, coated on both sides with a sealing coating such as a polymeric coating. Material may be formed on a coil coating line or made into a coil for transport or storage. A problem is caused by the sealing coating sticking to its adjacent layer in the coil. This can cause considerable damage, known as blocking. Application of a thin layer of a release agent according to the invention can substantially prevent blocking.

A release agent used according to the invention can also be used to aid release of materials from the pressing surfaces of a press. The release agent may be applied to the pressing surfaces or to the material to be pressed. Use of the release agent prevents damage to the material being pressed.

A release agent used according to the invention forms an anisotropic layer from which it is easy to release other materials.

"Chemically-exfoliated vermiculite" (CEV) is formed by treating vermiculite ore and swelling it in water. In one possible preparation method, the ore is treated with saturated sodium chloride solution to exchange magnesium ions for sodium ions, and then with n-butyl ammonium chloride to replace sodium ions with n-C₄H₉NH₃ ions. On washing with water swelling takes place. The swollen material is then subjected to high shear to produce an aqueous suspension of very fine (diameter below 50 microns) vermiculite particles.

Preferably, in a release agent used according to the invention, the plate-like filler is selected from the group consisting of talc, molybdenum disulphide, hexagonal boron nitride, soapstone, pyrophyllite, milled thermally exfoliated vermiculite, mica, metal flake, fluoromica and powdered graphite.

In order to avoid the release agent being removable by water, eg the engine coolant in the case of a head gasket, a release agent according to the invention may also comprise a water-proofing system to prevent removal of the release agent by water. A preferred water-proofing system comprises lithium silicate, potassium siliconate, and aluminium flake. The aluminium flake may be coated with a thin layer of stearate to prevent it floculating the chemically-exfoliated vermiculite. Since aluminium flake is a possible plate-like filler for inclusion in a release agent according to the invention, it is possible for aluminium flake to "double-up" as both a component of the water proofing system and as all or part of the plate-like filler. It is found that the water-proofing system may, suitably, form 29% by weight of the total solids content of the release agent. The ratio of lithium silicate to potassium siliconate in the water-proofing system is preferably 20 to 1.5:1, more preferably 12 to 8:1 (by weight of liquids-not solids content). The ratio of the lithium silicate to the chemically-exfoliated vermiculate is preferably 1:2 to 4.

Conveniently, the release agent further comprises a surfactant, which aids the wetting of the substrate by the release agent. Particularly suitable surfactants include non-ionic synthetic surfactants, such as fatty alcohols, such as Empilan KA5 (TM) from Albright & Wilson. The surfactant is typically added in an amount of 0.05% to 0.15% by volume. It is advantageous to burn away the surfactant after the release agent had been applied.

Preferred composition ranges of the release agent comprise 40-60% total solids by weight of chemically exfoliated vermiculite, and 60-40% total solids by weight of the plate-like filler.

In general, a plate-like filler has an average width of plates of at least three times the average thickness.

The water-based release agent may be used in various contexts as a release agent, but is particularly suitable for use with a coated gasket, such as a graphite-coated gasket or a gasket coated with nitrile butadiene rubber.

Therefore, the invention provides a gasket comprising a resilient material or portion, characterised in that the gasket also comprises a layer of a release agent which covers at least part of the resilient material or portion, characterised in that the release agent comprises:
30-99% total solids by weight of chemically exfoliated vermiculite, and
1-70% total solids by weight of a plate-like filler.

The release layer is preferably from 2 to 20 microns thick, more preferably from 5 to 10 microns thick.

Preferably, the gasket is graphite coated and the release agent is sprayed on to the graphite coating.

Alternatively, the gasket may, for example, be coated with a polymer such as nitrile butadiene rubber.

There now follow examples which are by way of illustration of the present invention.

### Example 1

100g of chemically exfoliated vermiculite slurry was used (ex WR Grace Construction Products, Microlite 926 grade, 7.5% solids in water).

7.5g of Molybdenum disulphide (99% < 2µm powder, ex Aldrich Chemicals) dispersed in 85g water was added and mixed with the vermiculite slurry and approximately 0.1mm³ of surfactant was added to form water based release agent I comprising 7.5% solids. The surfactant used was Empilan KA5.

### Example 2

Example 1 was repeated except that 7.5g of talc (ex Norwegian Talc (UK) Ltd, grade IT300) was added instead of the molybdenum disulphide, to form water-based release agent II.

### Example 3

Example I was repeated except that 7.5g of powdered graphite (ex David Hart Ltd) was added instead of molybdenum disulphide to form water-based release agent III.

Two different types of graphite foil:
(i) A foil made by pressing exfoliated graphite with 10% Borden P41 phenolic resin (designated "T&N foil"), and
(ii) graphite foil, obtained from UCAR Carbon Co. Inc. (GTY grade),
were each sprayed with release coatings I, II and III respectively, using a conventional air assisted spray gun. The coating thickness varied between 5 and 10µm.

The sprayed foils were then dried at 60°C in an oven.

Testing of the release agent-coated graphite foils was carried out by bolting the coated graphite between a cast iron and an aluminium plates (50mm diameter, 20mm thick). The plates had controlled surface finish depths, 0.2 - 0.3µm for the aluminium plate and 1.3 - 1.5µm for the cast iron plate. A torque of 34 Nm was applied to the bolt, to give a sample stress of 10.43 MPa (10mm bolt, nut and a washer each side were used, unlubricated).

Samples were tested (dry) after heating at 150°C and 250°C; after first soaking the torqued up plates in coolant/water (50:50) mix, and then heating at 150°C and 250°C; after soaking the coated foil in oil and torquing up, at 150° and 250°C; and after loosely assembling, soaking in coolant/water, torquing up and heating to 250°C. Control samples with no coating were also tested.

All of the control samples (exception - dry heating at 250°C) had varying degrees of sticking to the metal on disassembly. This was particularly bad after soaking in oil. In some cases the blocks had to be separated by considerable force.

The following tables of results show the results of the tests at low temperature and high temperature.

| | | |
|---|---|---|
| Key | very bad | considerable force required to separate test rig |
| | bad | coating sticks to ≥50% of any one surface |
| | good | some small amount of sticking |
| excellent | virtually totally clean release, no damage to foil | |
| - | not tested | |

| Foil and coating | Low Temperature (150°C) | | |
|---|---|---|---|
| | No soak | Oil soak | Coolant soak |
| Control T&N foil no release agent | - | Bad | Bad |
| T&N foil + release agent I | - | Good | Good |
| T&N foil + release agent II | - | - | - |
| T&N foil + release agent III | - | - | - |
| control UCAR foil no release agent | Bad | Bad | Bad |
| UCAR foil + release agent I | - | Excellent | Good |
| UCAR foil + release agent II | - | - | - |
| UCAR foil + release agent III | - | - | - |

| Foil and coating | High Temperature (250°C) | | | |
|---|---|---|---|---|
| | No soak | Oil Soak | Coolant soak | Hand-Tight Coolant Soak |
| Control T&N foil no release agent | Good | Bad | Bad | - |
| T&N foil + release agent I | Good | Excellent | Good | Very Bad |
| T&N foil + release agent II | - | Good | Bad | Bad |
| T&N foil + release agent III | - | Excellent | Excellent | Excellent |
| Control UCAR foil no release agent | Good | Bad | Bad | - |
| UCAR foil + release agent I | Good | Good | Excellent | - |
| UCAR foil + release agent II | - | Excellent | Excellent | - |
| UCAR foil + release agent III | - | Excellent | Excellent | Excellent |

A steel gasket having nitrile butadiene rubber coated on both surfaces was also tested with and without the release agent III sprayed onto the surfaces. The gasket was clamped in a similar manner to the graphite examples, and was heated at 120°C for 72 hours. It was found that the gasket with the release coating showed excellent release, while that without the release coating stuck and it required the use of considerable force to separate the test rig.

### Example 4

Example 4 includes a water-proofing system, which comprised lithium silicate, potassium siliconate and aluminium flake, the lithium silicate and potassium siliconate being in water. The formulation was:

| | Wt | Wt solids | % |
|---|---|---|---|
| CEV (15% solids) | 860g | 129g | 36 |
| Lithium Silicate | 430g | 43g | 12 |
| Potassium siliconate | 43g | 17g | 5 |
| Aluminium flake | 43g | 43g | 12 |
| Graphite | 129g | 129g | 36 |
| Water | 1720g | | |

The release agent coating formed by spraying and drying this formulation was found to be resistant to water.

## Claims

1. A gasket comprising a resilient material or portion, **characterised in that** the gasket also comprises a layer of a release agent which covers at least part of the resilient material or portion of the gasket, **characterised in that** the release agent comprises: 30-99% total solids by weight of chemically exfoliated vermiculite, and 1-70% total solids by weight of a plate-like filler.

2. A gasket according to claim 2, **characterised in that** the release agent layer is from 2 to 20 microns thick.

3. A gasket according to claim 2, **characterised in that** the release agent layer is from 5 to 10 microns thick.

4. A gasket according to any one of claims 1 to 3, **characterised in that** the plate-like filler is selected from the group consisting of talc, molybdenum disulphide, hexagonal boron nitride, soapstone, pyrophyllite, milled thermally exfoliated vermiculite, mica, metal flake, fluoromica and powdered graphite.

5. A gasket according to any one of claims 1 to 4, **characterised in that** the release agent also comprises a water-proofing system to prevent removal of the release agent by water.

6. A gasket according to claim 5, **characterised in that** the water-proofing system comprises lithium silicate, potassium siliconate, and aluminium flake.

7. A gasket according to any one of claims 1 to 6, **characterised in that** the release agent also comprises a surfactant.

8. A gasket according to claim 7, **characterised in that** the surfactant comprises a non-ionic synthetic fatty alcohol.

9. A gasket according to any one of claims 1 to 8, **characterised in that** the release agent comprises:
40-60% total solids by weight of chemically exfoliated vermiculite, and
60-40% total solids by weight of a plate-like filler.

## Patentansprüche

1. Dichtungselement, welches ein elastisches Material oder einen elastischen Abschnitt umfaßt, **dadurch gekennzeichnet, daß** das Dichtungselement außerdem eine Schicht eines Trennmittels, welche mindestens einen Teil des elastischen Materials oder des elastischen Abschnitts des Dichtungselements bedeckt, umfaßt, **dadurch gekennzeichnet, daß** das Trennmittel
30-99%, bezogen auf das Feststoffgesamtgewicht, eines chemisch expandierten Vermiculits und
1-70%, bezogen auf das Feststoffgesamtgewicht, eines plättchenartigen Füllstoffs umfaßt.

2. Dichtungselement nach Anspruch 1, **dadurch gekennzeichnet, daß** die Trennmittelschicht von 2 bis 20 Mikrometer dick ist.

3. Dichtungselement nach Anspruch 1, **dadurch gekennzeichnet, daß** die Trennmittelschicht von 5 bis 10 Mikrometer dick ist.

4. Dichtungselement nach einem der Ansprüche 1 bis 3, **dadurch gekennzeichnet, daß** der plättchenartige Füllstoff aus der Gruppe, bestehend aus Talk, Molybdändisulfid, hexagonalem Bornitrid, Speckstein, Pyrophyllit, zermahlenem thermisch expandiertem Vermiculit, Glimmer, Metallplättchen, Fluorglimmer und pulverigem Graphit, ausgewählt ist.

5. Dichtungselement nach einem der Ansprüche 1 bis 4, **dadurch gekennzeichnet, daß** das Trennmittel außerdem ein wasserabweisendes System umfaßt, um das Entfernen des Trennmittels durch Wasser zu verhindern.

6. Dichtungselement nach Anspruch 5, **dadurch gekennzeichnet, daß** das wasserabweisende System Lithiumsilikat, Kaliumsiliconat und Aluminiumplättchen umfaßt.

7. Dichtungselement nach einem der Ansprüche 1 bis 6, **dadurch gekennzeichnet, daß** das Trennmittel außerdem ein grenzflächenaktives Mittel umfaßt.

8. Dichtungselement nach Anspruch 7, **dadurch gekennzeichnet, daß** das grenzflächenaktive Mittel einen nicht-ionischen, synthetischen Fettalkohol umfaßt.

9. Dichtungselement nach einem der Ansprüche 1 bis 8, **dadurch gekennzeichnet, daß** das Trennmittel
40-60%, bezogen auf das Feststoffgesamtgewicht, eines chemisch expandierten Vermiculits und
60-40%, bezogen auf das Feststoffgesamtgewicht, eines plättchenartigen Füllstoffs umfaßt.

## Revendications

1. Joint d'étanchéité comprenant une matière ou partie résiliente, le joint d'étanchéité étant **caractérisé en ce qu'**il comprend également une couche d'un agent de séparation qui couvre au moins une partie de la matière ou partie résiliente du joint d'étanchéité, **caractérisé en ce que** l'agent de séparation comprend :
30 à 99% des matières solides totales en poids d'une vermiculite exfoliée chimiquement, et
1 à 70% des matières solides totales en poids d'une charge en plaquettes.

2. Joint d'étanchéité suivant la revendication 1, **caractérisé en ce que** la couche d'agent de séparation a une épaisseur comprise dans l'intervalle de 2 à 20 micromètres.

3. Joint d'étanchéité suivant la revendication 2, **caractérisé en ce que** la couche d'agent de séparation a une épaisseur comprise dans l'intervalle de 5 à 10 micromètres.

4. Joint d'étanchéité suivant l'une quelconque des revendications 1 à 3, **caractérisé en ce que** la charge en plaquettes est choisie dans le groupe consistant en le talc, le disulfure de molybdène, le nitrure de bore hexagonal, la stéatite, la pyrophyllite, la vermiculite broyée ayant subi une exfoliation thermique, le mica, des plaquettes métalliques, le mica fluoré et le graphite pulvérisé.

5. Joint d'étanchéité suivant l'une quelconque des revendications 1 à 4, **caractérisé en ce que** l'agent de séparation comprend également un système hydrofuge pour empêcher l'élimination de l'agent de séparation par l'eau.

6. Joint d'étanchéité suivant la revendication 5, **caractérisé en ce que** le système hydrofuge comprend du silicate de lithium, du siliconate de potassium et des paillettes d'aluminium.

7. Joint d'étanchéité suivant l'une quelconque des revendications 1 à 6, **caractérisé en ce que** l'agent de séparation comprend également un agent tensio-actif.

8. Joint d'étanchéité suivant la revendication 7, **caractérisé en ce que** l'agent tensio-actif comprend un alcool gras synthétique non ionique.

9. Joint d'étanchéité suivant l'une quelconque des revendications 1 à 8, **caractérisé en ce que** l'agent de séparation comprend :
40 à 60% des matières solides totales en poids d'une vermiculite exfoliée chimiquement, et
60 à 40% des matières solides totales en poids d'une charge en plaquettes.
